# EUROPEAN PATENT APPLICATION

(11) **EP 2 770 768 A2**
(43) Date of publication of application: **27.08.2014**
(21) Application number: 12841456.2
(22) Date of filing: 15.10.2012
(51) Int. Cl.: H04W 12/04

(54) **METHOD AND SYSTEM FOR REPLACING AN SE KEY OF A MOBILE TERMINAL**

(30) Priority: 18.10.2011 KR 20110106410
(71) Applicant: SK C&C Co., Ltd., Seongnam-si, Gyeonggi-do 463-844 (KR)
(72) Inventor: JEON, Young Hwan, Gyeonggi-do 445-160 (KR); JE, Yun Ho, Seoul 135-010 (KR); CHO, Seung Jin, Seoul 135-070 (KR)
(74) Representative: Walaski, Jan Filip
(86) International application number: PCT/KR2012/008378
(87) International publication number: WO 2013/058509

(57) **Abstract**

A method and system for replacing a key deployed in an SE of a mobile terminal is provided. The method requests, upon receiving a request for a replacement of a key deployed in an SE which is equipped on a mobile terminal, a new key from a service provider which has issued the replacement-requested key and receiving the new key, and transmits the new key to the mobile terminal. Accordingly, the key deployed in the SE can be replaced online by the user's request. Therefore, when it is necessary to replace the key deployed in the SE for various reasons like key exposure, the user can replace the key of the SE without visiting an institution having a key deployment device and thus user convenience can be improved.

## Description

### TECHNICAL FIELD

Methods and apparatuses consistent with exemplary embodiments relate to a method and system for replacing a key, and more particularly, to a method and system for replaying a key deployed in a Secure Element (SE) equipped on a mobile terminal.

### Background Art

The SE equipped on mobile terminals refers to an secure element in which an applet and a key for services such as mobile communication, finance, authorization, payment, credential management, and others are deployed, and may be classified into three well known types: a Universal Subscriber Identity Module (USIM), an embedded SE(eSE), and a Secure Memory Card (Secure MC).

The USIM is a combination of a Subscriber Identity Module (SIM) card containing subscriber information and a Universal IC Card (UICC), and is the most commonly used type today.

The Embedded SE is a type of SE that is directly embedded on a Printed Circuit Board (PCB) of a mobile terminal as a part of the mobile terminal.

The Secure MC is a type of SE that is embedded in an external memory card (a Micro SD card, a Micro MMC card, etc.) which is mountable in mobile terminals.

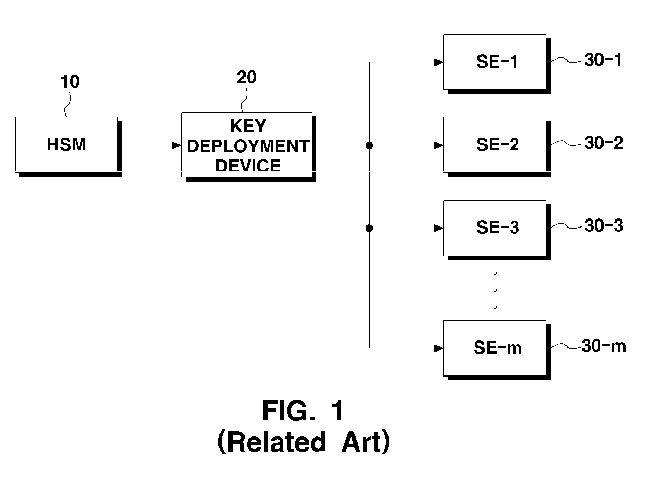

FIG. 1 illustrates a prior art system for deploying a necessary key in the SE. As illustrated in FIG. 1, a key deployment device 20 generally deploys keys generated by an Hardware Secure Module (HSM) 10 in various SEs 30-1 to 30-m, respectively.

There are many limitations and inconveniences in replacing the keys deployed in the SEs 30-1 to 30-m in the system shown in FIG. 1. Specifically, in order to replace the key deployed in the USIM or Secure MC, the USIM or Secure MC should be directly mounted in the key deployment device 20, and in order to replace the key deployed in the Embedded SE, the mobile terminal in which the Embedded SE is embedded should be directly connected to the key deployment device 20. Due to these limitations, the user of the SE has inconvenience of having to visit a Mobile Network Operator (MNO) or Financial Institution having the key deployment device 20 in any event.

In addition, due to these limitations, when it is necessary to replace the key deployed in the SE, an SE in which a new key is deployed should be directly delivered to the user. However, such a delivering process applies only to the USIM or Secure MC, and does not apply to the Embedded SE.

### Disclosure

### Technical Problem

One or more exemplary embodiments provide a method and system for replacing a key deployed in an SE online in response to a user's request.

### Technical Solution

According to an aspect of an exemplary embodiment, there is provided a method for replacing a key deployed in an SE, the method including: receiving a request for a replacement of a key deployed in an SE which is equipped on a mobile terminal; requesting a new key from a service provider which has issued the replacement-requested key and receiving the new key; and transmitting the new key to the mobile terminal.

The transmitting may include: transmitting a key replacement guide to the mobile terminal; and, upon receiving a key replacement request from the mobile terminal as a response to the key replacement guide, transmitting the new key to the mobile terminal.

The transmitting may include transmitting the new key to the mobile terminal in a push method.

Upon receiving the new key, the mobile terminal may undeploy the key deployed in the SE and may deploy the new key.

When a user identifies a push notification and commands the key replacement, the mobile terminal may undeploy the key deployed in the SE and may deploy the new key.

The method may further include storing a replacement request history.

The receiving the request may include receiving a request for a replacement of a key used for a specific service, and the requesting and receiving may include requesting a new key from a service provider providing the specific service and receiving the new key.

The method may further include determining whether the mobile terminal is a registered mobile terminal that is allowed to be provided with a key replacement service online, and the requesting and receiving may be performed when the mobile terminal is determined as being registered.

The receiving the request may include receiving the request for the replacement of the key from another terminal separated from the mobile terminal.

The receiving the request, the requesting and receiving, and the transmitting may be performed when the key deployed in the SE is exposed.

The receiving the request, the requesting and receiving, and the transmitting may be performed when a test on at least one of the mobile terminal, the SE, and the service provider is conducted.

The method may further include: receiving a request for an additional key to be deployed in the SE equipped on the mobile terminal; requesting the additional key from a service provider which issues the additional key and receiving the additional key; and transmitting the additional key to the mobile terminal.

According to an aspect of another exemplary embodiment, there is provided a key management server including: a communication interface configured to receive a request for a replacement of a key deployed in an SE equipped on a mobile terminal; and a controller configured to request a new key from a service provider which has issued the replacement-requested key through the communication interface, receive the key, and transmit the key to the mobile terminal.

According to an aspect of still another exemplary embodiment, there is provided a method for replacing a key deployed in an SE, the method including: requesting a replacement of a key deployed in an SE; receiving a new key as a response to the request; undeploying the key deployed in the SE; and deploying the new key in the SE.

### Advantageous Effects

According to the exemplary embodiments described above, the key deployed in the SE can be replaced online by the user's request. Therefore, when it is necessary to replace the key deployed in the SE for various reasons like key exposure, the user can replace the key of the SE without visiting an institution having a key deployment device and thus user convenience can be improved.

In addition, since the SE can be used continually, resource waste caused by an overissue of SEs can be prevented.

In addition, according to the exemplary embodiments, a new key can be additionally deployed in the SE online by the user request. Therefore, when a new service is added, the user can deploy a key necessary for the new service without visiting a service providing institution and thus user convenience can be improved.

### Description of Drawings

FIG. 1 is a view illustrating a related-art system for deploying keys in SEs;
FIG. 2 is a view illustrating an SE key replacement system according to an exemplary embodiment;
FIG. 3 is a view to illustrate an SE key replacement method according to an exemplary embodiment;
FIG. 4 is a view to illustrate an SE key replacement method according to another exemplary embodiment; and
FIG. 5 is a block diagram illustrating a key management server shown in FIG. 2.

### Best Mode

Hereinafter, exemplary embodiments will be described in greater detail with reference to the accompanying drawings.

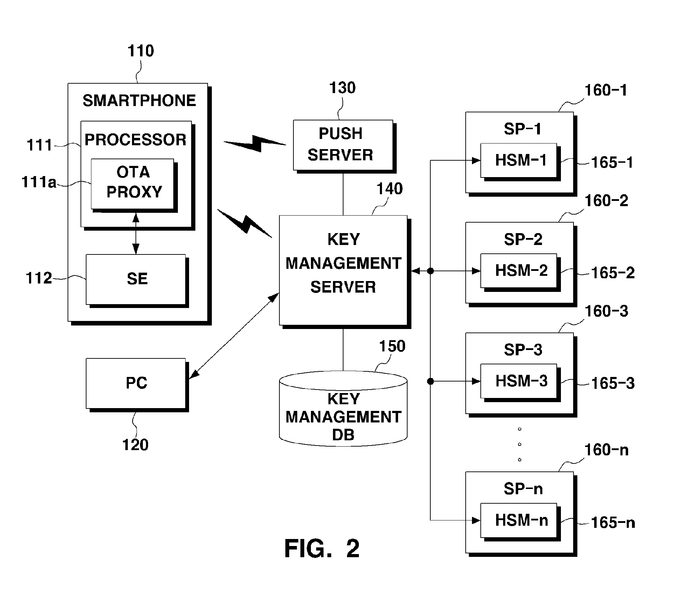

FIG. 2 is a view illustrating an SE key replacement system according to an exemplary embodiment. The SE key replacement system is a system that replaces a key deployed in an SE equipped on a user's smartphone with a new key in response to a request of the user.

As shown in FIG. 2, the SE key replacement system performing this function is established by connecting a smartphone 110, a Personal Computer (PC) 120, a push server 130, a key management server 140, a key management DataBase (DB) 150, and Service Providers (SPs) 160-1 to 160-n to mutually communicate with one another.

The smartphone 110 is a kind of mobile terminal and is equipped with an SE 112. The SE 112 equipped on the smartphone 110 is not limited to a specific type. That is, a USIM, an Embedded SE, or a Secure MC as well as other types of SE may be equipped on the smartphone 110 and used.

The smartphone 110 can interface with the SE 112 via an Over The Air (OTA) proxy 111a which is driven by a processor 111.

The PC 120 is a means that is used when the user of the smartphone 110 requests the key management server 140 to replace the key deployed in the SE 112.

The key management server 140 is a server that performs a necessary procedure for replacing the key deployed in the SE 112 of the smartphone 110.

The key management DB 150 is a DB in which items associated with the key replacement are stored and the push server 130 is a server that transmits a push message for replacing the key to the smartphone 110.

The SPs 160-1 to 160-n provide various services such as mobile communication, finance, authorization, payments, etc. to the smartphone 110, and include HSMs 165-1 to 165-n to generate keys necessary for the services.

Hereinafter, a process of replacing the key deployed in the SE 112 equipped on the smartphone 110 of the user with a new key in the SE key replacement system shown in FIG. 2 will be explained in detail.

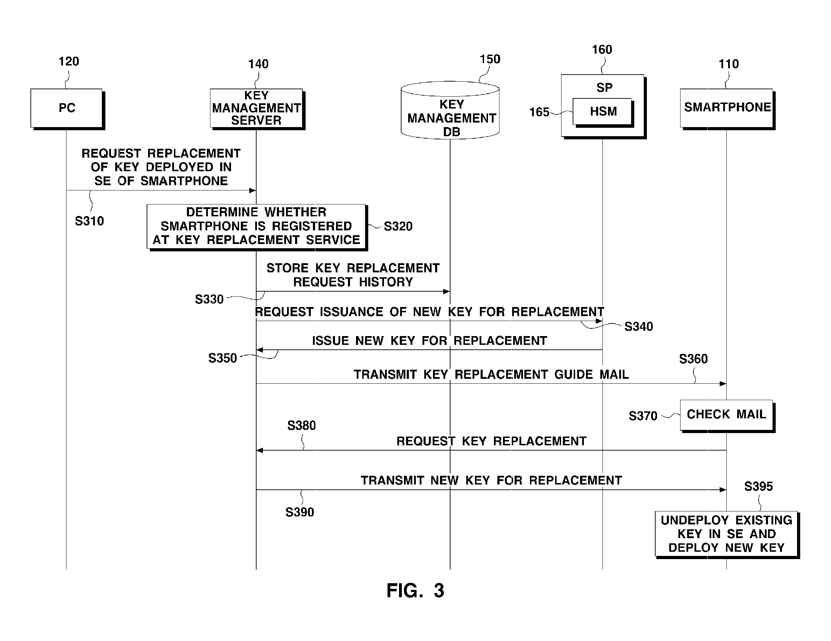

FIG. 3 is a view to illustrate an SE key replacement method according to an exemplary embodiment.

As shown in FIG. 3, the PC 120 requests the key management server 140 to replace the key deployed in the SE 112 of the smartphone 110 (S310). In operation S310, the key replacement request is input by the user via the PC 120. The smartphone 110 may be specified by an S/N or phone number, and the SE 112 may be specified by an S/N.

A plurality of keys may be deployed in the SE 112 of the smartphone 110. In this case, the user of the smartphone 110 may directly designate a 'key' that needs to be replaced, or may designate a 'service' using the key that needs to be replaced. When the service is designated, the key used for the service is deemed to be designated and the next procedures are performed.

Upon receiving the key replacement request in operation S310, the key management server 140 determines whether the smartphone 110 of the user is pre-registered at a key replacement service (S320). The key replacement service identified in operation S320 refers to a service that provides key replacement online.

When the smartphone 110 is not pre-registered at the key replacement service, the request in operation S310 is discarded and following operations of operation S320 are not performed.

When the smartphone 110 is pre-registered at the key replacement service, the key management server 140 stores a key replacement request history received in operation S310 in the key management DB 150 (S330).

In operation S330, the key replacement request history may be stored for the smartphone 110 or the SE 112 separately, so that the key replacement request history can be provided for the smartphone 110 or the SE 112 separately afterward.

Thereafter, the key management server 140 requests the SP 160 to issue a new key for replacement (S340). In operation S340, the key management server 140 requests the new key from the SP 160 that has issued the replacement-requested key in operation S310.

That is, when the SP that has issued the replacement-requested key is the SP-1 160-1, the key management server 140 requests the SP-1 160-1 to issue the new key, and when the SP that has issued the replacement-requested key is the SP-3 160-3, the key management server 140 requests the SP-3 160-3 to issue the new key.

The SP 160 which is requested to issue the key in operation S340 generates the new key through the HSM 165 and issues the new key to the key management server 140 (S350).

The key management server 140 which is issued with the new key by the SP 160 in operation S350 transmits a key replacement guide mail to the smartphone 110 (S360). The key replacement guide mail is a mail that contains a message for informing that the new key to be replaced has been issued and for inducing the user to request the key replacement.

In operation S360, the key replacement guide mail may be transmitted in the form of a Short Message Service (SMS) or Multimedia Messaging Service (MMS) rather than the mail form.

The key replacement guide mail received in operation S360 is checked by the user of the smartphone 110 (S370). When the smartphone 110 requests the key management server 140 to replace the key (S380), the key management server 140 transmits the new key that has been issued by the SP 160 in operation S350 to the smartphone 110(S390).

The smartphone 110 undeploys the existing key that has been already deployed in the SE 112 and deploys the new key received in operation S390 (S395). Consequently, the key deployed in the SE 112 of the smartphone 110 is replaced with the new key.

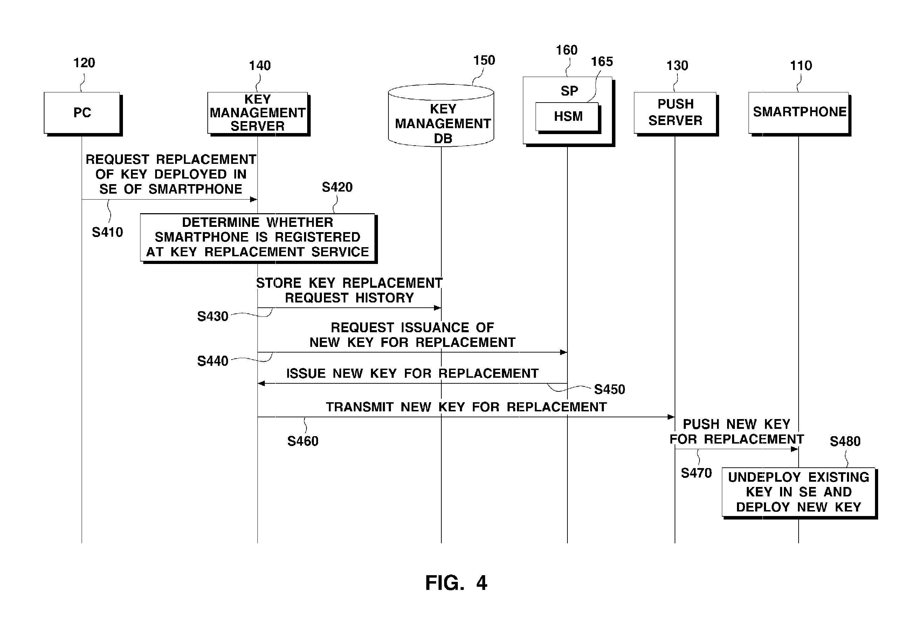

Hereinafter, another method for replacing the key deployed in the SE 112 equipped on the smartphone 110 of the user with a new key in the SE key replacement system shown in FIG. 2 will be explained in detail with reference to FIG. 4.

FIG. 4 is a view illustrating an SE key replacement method according to another exemplary embodiment. Since operations S410 to S450 shown in FIG. 4 are the same as operations S310 to 350 shown in FIG. 3, a detailed explanation thereof is omitted and following operations of operation S450 will be explained.

The key management server 140 which is issued with a new key by the SP 160 in operation S450 transmits the new key to the push server 130 (S460). Then, the push server 130 transmits the new key received in operation S460 to the smartphone in a push method (S470).

Thereafter, the smartphone 110 undeploys the existing key that has been already deployed in the SE 112 and deploys the new key pushed in operation S470 (S480). Consequently, the key deployed in the SE 112 of the smartphone 110 is replaced with the new key.

Operation S480 may be performed right after the new key is pushed from the push server 130 without receiving a confirmation from the user, or may be performed after receiving a confirmation from the user through a push notification (that is, after the user identifies the push notification and commands the key replacement).

Up to now, the exemplary embodiments of the SE key replacement system have been described in detail.

The SE key replacement according to the above-described exemplary embodiments is useful when the key deployed in the SE 112 of the smartphone 110 is exposed or a test to develop at least one of the smartphone 110, the SE 112, and the service provider 160 is conducted.

In addition, in the above-described exemplary embodiments, the PC 120 which is separated from the smartphone 110 requests the key replacement. However, this is to enhance the security and can be modified. Accordingly, the smartphone 110 may request the key replacement instead of the PC 120.

In addition, the smartphone 110 is one of the examples of the mobile terminals. The present exemplary embodiments can apply to replacing a key of an SE equipped on other mobile terminals in addition to the smartphone 110.

In addition, in the above-described exemplary embodiments, the key deployed in the SE 112 of the smartphone 110 is replaced. It is possible to add a function of deploying a new key in the SE 112. That is, when a new key that has never been deployed before is requested to be issued by the smartphone 110, the key management server 140 requests the SP to issue the requested key, receives the key, and transmits the key to the smartphone 110.

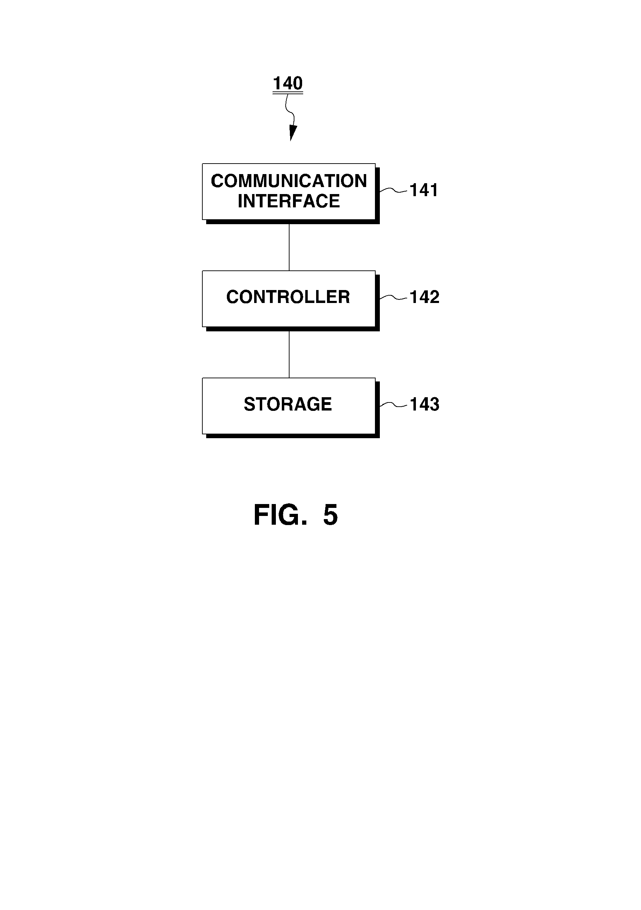

FIG. 5 is a block diagram illustrating the key management server 140 shown in FIG. 2. As shown in FIG. 5, the key management server 140 includes a communication interface 141, a controller 142, and a storage 143.

The communication interface 141 is a communicating means for accessing the smartphone 110, the PC 120, the push server 130, the key management DB 150, and the SPs 160-1 to 160-n.

The storage 133 is a means for storing programs and data necessary for operating the key management server 140. The key management DB 150 shown in FIG. 2 may be incorporated into the storage 133 and the key management DB 150 may be omitted.

The controller 142 performs the processes that are to be performed by the key management server 140 from among the processes shown in FIGS. 3 and 4.

In addition, the push server 130 shown in FIG. 2 may be incorporated into the key management server 140 and the push server 130 may be omitted.

The technical idea of the present exemplary embodiments can apply to a computer-readable recording medium that records a computer program for performing the functions of the apparatus and method according to the exemplary embodiments. In addition, the technical idea of the various exemplary embodiments may be implemented in the form of a computer-readable code that is recorded on a computer-readable recording medium. Any data storage device that can be read by a computer and can store data may be used as the computer-readable recording medium. For example, the computer-readable recording medium may be a Read Only Memory (ROM), a Random Access Memory (RAM), a CD-ROM, a magnetic tape, a floppy disk, an optical disk, a hard disk drive, etc. In addition, the computer-readable code or program stored in the computer-readable recording medium may be transmitted through a network connected among computers.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for replacing a key deployed in an SE, the method comprising:
receiving a request for a replacement of a key deployed in an SE which is equipped on a mobile terminal;
requesting a new key from a service provider which has issued the replacement-requested key and receiving the new key; and
transmitting the new key to the mobile terminal.

2. The method of claim 1, wherein the transmitting comprises:
transmitting a key replacement guide to the mobile terminal; and
upon receiving a key replacement request from the mobile terminal as a response to the key replacement guide, transmitting the new key to the mobile terminal.

3. The method of claim 1, wherein the transmitting comprises transmitting the new key to the mobile terminal in a push method.

4. The method of claim 3, wherein, upon receiving the new key, the mobile terminal undeploys the key deployed in the SE and deploys the new key.

5. The method of claim 4, wherein, when a user identifies a push notification and commands the key replacement, the mobile terminal undeploys the key deployed in the SE and deploys the new key.

6. The method of claim 1, further comprising storing a replacement request history.

7. The method of claim 1, wherein the receiving the request comprises receiving a request for a replacement of a key used for a specific service, and
wherein the requesting and receiving comprises requesting a new key from a service provider providing the specific service and receiving the new key.

8. The method of claim 1, further comprising determining whether the mobile terminal is a registered mobile terminal that is allowed to be provided with a key replacement service online, and
wherein the requesting and receiving is performed when the mobile terminal is determined as being registered.

9. The method of claim 1, wherein the receiving the request comprises receiving the request for the replacement of the key from another terminal separated from the mobile terminal.

10. The method of claim 1, wherein the receiving the request, the requesting and receiving, and the transmitting are performed when the key deployed in the SE is exposed.

11. The method of claim 1, wherein the receiving the request, the requesting and receiving, and the transmitting are performed when a test on at least one of the mobile terminal, the SE, and the service provider is conducted.

12. The method of claim 1, further comprising:
receiving a request for an additional key to be deployed in the SE equipped on the mobile terminal;
requesting the additional key from a service provider which issues the additional key and receiving the additional key; and
transmitting the additional key to the mobile terminal.

13. A key management server comprising:
a communication interface configured to receive a request for a replacement of a key deployed in an SE equipped on a mobile terminal; and
a controller configured to request a new key from a service provider which has issued the replacement-requested key through the communication interface, receive the key, and transmit the key to the mobile terminal.

14. A method for replacing a key deployed in an SE, the method comprising:
requesting a replacement of a key deployed in an SE;
receiving a new key as a response to the request;
undeploying the key deployed in the SE; and
deploying the new key in the SE.
